(19) Europäisches Patentamt
European Patent Office
Office européen des brevets

(11) EP 1 215 671 A2

(12) EUROPEAN PATENT APPLICATION

(43) Date of publication:
19.06.2002 Bulletin 2002/25

(51) Int Cl.[7]: G11B 7/26, G11B 7/24

(21) Application number: 01310420.3

(22) Date of filing: 13.12.2001

(84) Designated Contracting States:
AT BE CH CY DE DK ES FI FR GB GR IE IT LI LU MC NL PT SE TR
Designated Extension States:
AL LT LV MK RO SI

(30) Priority: 13.12.2000 JP 2000379151

(71) Applicant: MITSUI CHEMICALS, INC.
Tokyo (JP)

(72) Inventors:
- Mihara, Norihiko, c/o Mitsui Chemicals Inc.
Sodegaura-shi, Chiba (JP)
- Murayama, Shunsuke, c/o Mitsui Chemicals, Inc.
Sodegaura-shi, Chiba (JP)
- Nara, Ryosuke, c/o Mitsui Chemicals, Inc.
Sodegaura-shi, Chiba (JP)
- Koeke, Tadashi, c/o Mitsui Chemicals, Inc.
Sodegaura-shi, Chiba (JP)

(74) Representative: Cresswell, Thomas Anthony et al
J.A. KEMP & CO.
14 South Square
Gray's Inn
London WC1R 5JJ (GB)

# (54) Optical recording medium and process for production thereof

(57) In an optical recording medium, a recording layer is formed by coating a substrate with a solution of coloring matter comprising a coloring matter dissolved in a solvent comprising a mixture of cyclooctane and at least one hydrocarbon having 6 to 9 carbon atoms other than cyclooctane. The obtained optical recording medium enables the suppression of leakage of the land prepit signal for address information into the RF signal for recorded data at the time of recorded data reproduction, thereby attaining a lowering of error rate.

Fig. 2

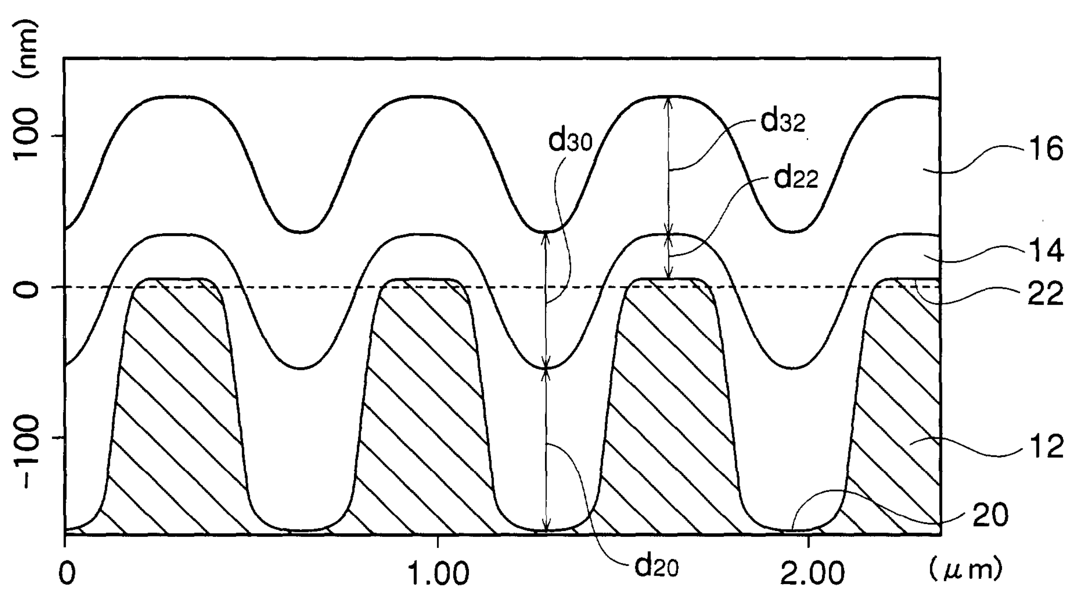




Printed by Jouve, 75001 PARIS (FR)

## Description

### FIELD OF THE INVENTION

The present invention relates to an optical recording medium wherein a film of coloring matter is provided as a recording layer, and relates to a process for producing the same.

### BACKGROUND OF THE INVENTION

In accordance with the progress of electronic industry, mass storage optical recording disks for optically performing recording, such as CD·R, DVD·R and DVD·RW, are widely used as an external memory of personal computer or an image recording medium substituted for a video, recently as a mass storage optical recording medium. Among the mediums capable of optical recording, a write-once-read (WOR) type compact disk having reproduction interchangeability with common reproduction-only (read-only) CD·ROM, which permits recording only once, is known as CD·R and used by many people. Further, the development of a medium of capable of recording even with Digital Versatile Disk (DVD) having a recording density higher than that of CD is being promoted. In particular, the spread of write-once-read type DVD·R is anticipated in view of the high interchangeability with DVD·ROM.

In such a mass storage optical recording disk, a recording surface is generally provided in the internal part of the disk, not on the disk surface, and a film of coloring matter consisting mainly of a coloring matter is used as a recording layer. For example, in a write-once-read type optical recording medium, an organic coloring matter is used in the recording layer. When irradiated with laser beams, the coloring matter is locally heated and thus denatured to thereby enable bit formation and information recording.

As the coloring matter for use in the recording layer, there can be mentioned, for example, any of cyanine, phthalocyanine and metallic azo dyes.

These dyes are generally dissolved in an appropriate organic solvent and formed into films by the spin coating method to thereby provide recording layers. The principal component of a solvent in a coating solution, when it is intended to form a uniform film having a given dye film thickness selected within the range of 40 to 200 nm at a tolerance of not greater than 10% in a room temperature atmosphere, has been selected from among those exhibiting an appropriate evaporation temperature, an appropriate dye solubility and not dissolving transparent resin substrates.

For example, in many technical disclosures relating to an optical recording medium obtained by applying an organic dye, the use of a solvent of hydrocarbon having 6 to 9 carbon atoms by spin coating is known. In Japanese Patent Laid-open Publication No. 9(1997)-267562, the application of a phthalocyanine dye and a tetraazaporphyrin dye was carried out with the use of a hydrocarbon solvent. Also, in Japanese Patent Laid-open Publication No. 10 (1998) -226172, there is disclosed a film forming method wherein dimethylcyclohexane and ethylcyclohexane were used as a coating solvent.

In the use of the optical recording medium having the recording layer of the above dye film as well, it is needed to correctly obtain disk information such as address at the time of recording.

For example, in the above write-once-read type optical recording medium, prepits are engraved in advance on land zones of the substrate, and address information is obtained by signals received from the land prepits. With respect to the land prepit signals, prepits of about 0.2 to 1.0 µm are formed on land zones, and detection thereof is achieved by any difference of reflectivity light between prepit zones and nonprepit zones according to the push pull method.

These land prepits are read, together with data signal pits, by an optical pickup at the time of data signal reproduction. Tracking servo of the optical pickup is effected along a tracking guide, so that, under ordinary conditions, the land prepits and the data signal recording pits formed on grooves are discriminated from each other and read.

However, there is a problem that the optical recording medium obtained by actually forming a dye film with the use of the above conventional solvent suffered from leakage of land prepit signal into RF signal which detects the presence of pits for data signal recording.

The land prepits are needed to obtain address information such as positional information on the optical recording medium at the time of recording, but are not needed at the time of reproduction.

The above leakage of land prepit signal into RF signal for recorded data sometimes become a factor of error occurrence in the reading of RF signal at the time of reproduction.

### OBJECT OF THE INVENTION

In view of the above current state of art, it is an object of the present invention to provide an optical recording medium which can reduce the leakage of land prepit signal into RF signal to thereby enable recording and reproduction (reading) at a desirable error rate (signal detection error ratio), and to provide a process for producing the same.

SUMMARY OF THE INVENTION

The optical recording medium of the present invention comprises a recording substrate having grooves and lands provided in the form of a spiral or concentric circles and, superimposed thereon, a recording layer, a reflective layer and a protective layer,

the above recording layer comprising a film of coloring matter formed by applying a solution of coloring matter on upper surfaces of the grooves and lands,

wherein groove zones and land zones exhibit substantially equal reflectivities of the incident light seen from the recording substrate side.

The terminology "substantially equal" used herein means that, providing that $R_{20}$ represents the reflectivity on the groove zones while $R_{22}$ represents the reflectivity on the land zones, $R_{20}$ and $R_{22}$ satisfy the relationship:

$$0.90 \leq R_{20}/R_{22} \leq 1.10,$$

preferably

$$0.93 \leq R_{20}/R_{22} \leq 1.07.$$

Preferably, in the above coloring matter solution, a coloring matter is dissolved in a solvent comprising a mixture of cyclooctane and at least one hydrocarbon having 6 to 9 carbon atoms other than cyclooctane. Still preferably, cyclooctane is contained in the solvent in an amount of 1 to 50% by weight. It is preferred that the above coloring matter be a dipyrromethene metal complex.

Moreover, the optical recording medium preferably exhibits an amplitude of leakage of land prepit signal into RF signal, X(V), and an amplitude of $I_3$ signal, Y(V), these X and Y satisfying the relationship:

$$-0.3 \leq X/Y \leq 0.3.$$

Now, the process of the present invention for producing the above optical recording medium comprises coating a substrate with a coloring matter solution so as to form a recording layer, the coloring matter solution in which a coloring matter is dissolved in a solvent comprising a mixture of cyclooctane and at least one hydrocarbon having 6 to 9 carbon atoms other than cyclooctane.

Preferably, cyclooctane is contained in the solvent in an amount of 1 to 50% by weight. It is preferred than the coloring matter be a dipyrromethene metal complex.

It is also preferred that the optical recording medium obtained by the process of the present invention exhibit an amplitude of leakage of land prepit signal into RF signal, X(V), and an amplitude of $I_3$ signal, Y(V), these X and Y satisfying the relationship:

$$-0.3 \leq X/Y \leq 0.3.$$

The reason why substantially equal reflectivities of groove zones and land zones attain suppression of the leakage of land prepit signal into RF signal is explained as follows.

It is preferred that the depth of groove be equal to the depth of land prepit in the present invention.

In reproduction of recorded data, when the reproduction laser beam is scanned to lines of recording pits on groove, the edge of beam is irradiated on land zones, thereby change of reflectivity on land prepit zones sometimes overlaps to data signals, to lead increase of the error rate by recognizing the land prepit as a part of signals in some case.

The inventors have considered that the change of reflectivity is mainly originated in the difference in the thickness between the coloring matter film on land prepit zones and the coloring matter film on land zones without land prepits.

And then, by forming coloring matter films having the thickness exhibiting substantially equal reflectivites on land prepit zones and on land zones without land prepits respectively, even if the edge of reproduction laser beam is irradiated on land prepit zones, the reflectivity on a RF signals have been seemingly made uniform.

Since the thickness of coloring matter film on the land prepit zones is substantially equal to the one on the groove zones, the reflectivity of the land prepit zones becomes equivalent to the one of the groove zones. Therefore, it is important for a design of the optical recording medium to control so that the reflective on the groove zones which

can monitor easily is equal to the reflective on the land zones without land prepits.

When, on the substrate, the groove zones and land zones exhibit substantially equal reflectivities of the incident light seen from the above, the reflectivity exhibited when an optical pickup which follows the grooves is positioned at a site of land prepit presence is substantially equal to the reflectivity exhibited when the optical pickup is positioned at a site of land prepit absence, with the result that the leakage of land prepit signal into RF signal can be suppressed.

The use of mixture of hydrocarbon other than cyclooctane with cyclooctane having not only appropriately high viscosity but also a boiling point higher than that of the principal solvent as a solvent leads controlling the configuration of obtained coloring matter film.

The reflectivity on groove zones is determined from (a) to (d) by matrix calculation:

(a) wavelength of incident light,
(b) optical constants of substrate,
(c) optical constants of recording layer (refractive index and damping factor) and film thickness on groove zones, and
(d) optical constants of reflective layer (refractive index and damping factor) and film thickness.

Likewise, the reflectivity on land zones is determined from (a') to (d') by matrix calculation:

(a') wavelength of incident light,
(b') optical constants of substrate,
(c') optical constants of recording layer (refractive index and damping factor) and film thickness on groove zones, and
(d') optical constants of reflective layer (refractive index and damping factor) and film thickness.

Herein, the expression "enabling controlling the configuration of coloring matter film by the use of fyflooftane as a solvent" means that the film thickness on groove zones and the film thickness on land zones can be controlled independently, and that, on the substrate, the reflectivity on groove zones and the reflectivity on land zones can be controlled independently.

Thus, regulation of the mixing amount of cyclooctane in solvent enables controlling the film thickness on groove zones and the film thickness on land zones so that, on the substrate, the groove zones and land zones exhibit substantially equal reflectivities, thereby attaining suppression of the leakage of land prepit signal into RF signal.

## BRIEF DESCRIPTION OF THE DRAWING

Fig. 1 is a schematic sectional view of the optical recording medium of the present invention, and
Fig. 2 is a schematic partially enlarged sectional view of the optical recording medium of the present invention.

## DETAILED DESCRIPTION OF THE INVENTION

The optical recording medium and process for producing the same according to the present invention will be described in detail below with reference to embodiments thereof.

Fig. 1 is a schematic sectional view of the optical recording medium of the present invention, and Fig. 2 is a schematic partially enlarged sectional view of the optical recording medium of the present invention.

Referring to Fig. 1, numeral 10 generally denotes the optical recording medium of the present invention.

The optical recording medium 10 comprises recording substrate 12 having grooves 20 and lands 22 provided in the form of a spiral or concentric circles and, sequentially superimposed thereon, at least recording layer 14, reflective layer 16 and protective layer 18 in this order. The above recording layer 14 is formed by applying a solution of coloring matter on upper surfaces of the grooves 20 and lands 22, The groove zones 20 and land zones 22 exhibit substantially equal reflectivities as measured through the recording substrate 12.

The recording substrate 12 for use in the present invention may consist of a transparent substrate. The material thereof can be, for example, a plastic such as a polycarbonate, a polymethacrylate, a polyacrylate or a polyolefin, or a glass. A polycarbonate is especially preferred from the viewpoint of strength, moisture/heat resistance performance and mass productivity. Although the process for producing the substrate 12 is not particularly limited, the substrate 12 is generally produced by injection molding from the viewpoint of productivity, such as mass production. With respect to the substrate 12, the lower surface side 11 being the plane of light incidence usually has undergone specular finish.

The thickness of the substrate 12 is generally in the range of about 0.6 to 1.2 mm. On the substrate 12,

grooves (guide channels) 20 are provided in the form of a spiral or concentric circles with a pitch of 0.5 to 2 μm, a depth of 50 to 250 nm and a width of about 200 to 700 nm. On the zones interposed between neighboring grooves 20, there are provided lands 22.

In particular, on the recording substrate 12 for use in the DVD·R medium having a capacity of 4.7 GB, when a track pitch is 0.74 μm, the depth of groove 20 is optimized within the range of 140 to 250 nm, preferably 150 to 180 nm, and the width of groove 20 is optimized within the range of 250 to 450 nm, preferably 270 to 350 nm.

Although in principle any type of coloring matter can be used as the coloring matter for forming the recording layer 14 on the grooves 20 and lands 22 as long as it absorbs recording laser beams and transduces the same into heat, for example, a cyanine dye, a phthalocyanine dye, a metallic azo dye, a porphyrin dye and a metallic pyrromethene dye as a coloring matter group having high refractive index are preferred.

Of these, a phthalocyanine dye, a porphyrin dye and a metallic pyrromethene dye which are soluble in nonpolar solvents are preferably used as the coloring matter in the present invention. A metallic pyrromethene dye is especially preferred.

In particular, a metallic pyrromethene dye represented by the following formula (1) has large effect on the leakage of land prepit signal into RF signal.

Formula:

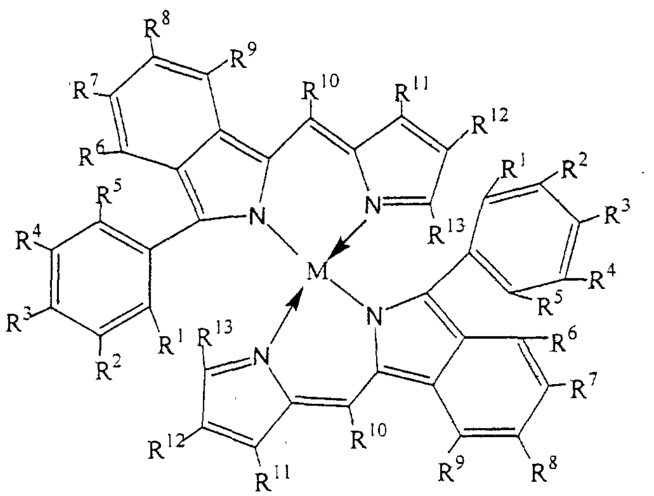

(1)

wherein each of $R^1$ to $R^{13}$ independently represents a hydrogen atom, a halogen atom, a cyano group, a nitro group, a substituted or unsubstituted alkyl group having 1 to 12 carbon atoms, a substituted or unsubstituted alkoxy group having 1 to 12 carbon atoms, an amino group or a substituted or unsubstituted aryl group having 7 to 20 carbon atoms. Further, in the formula (1), the central metal, M, although not particularly limited as long as it is a metal capable of forming a complex with a dipyrromethene compound, is preferably selected from among transition metals such as Cu, Co, Ni, Mn, Zn and Pd from the viewpoint of stability and optical performance. Examples of substituents of the above alkyl group, alkoxy group and aryl group include an alkyl such as methyl, ethyl, n-propyl, i-propyl, n-butyl, i-butyl, sec-butyl, tert-butyl, n-pentyl or i-pentyl, an alkoxy such as methoxy, ethoxy, propoxy or butoxy, and an aryl such as phenyl, tolyl or xylyl.

The recording layer 14 can be formed by applying a coloring matter solution with the use of conventional coating technique such as spin coating, spray coating or roll coating. Spin coating is especially preferred from the viewpoint of mass productivity and process tactical shortening. This recording layer 14 is so formed that the film thickness on grooves 20 of the substrate 12 is in the range of 40 to 200 nm, preferably 70 to 150 nm, and that the film thickness on lands 22 of the substrate 12 is in the range of 20 to 60 nm.

First, a coloring matter solution is prepared by dissolving coloring matter in a solvent which would not damage the substrate 12. The solution is applied onto the substrate 12 and dried to thereby form the recording layer 14.

With respect to the principal component of the solvent which would not damage the substrate 12, all of solvent groups such as alcohols, ketones, cellosolves and halogenated hydrocarbons are not desirable from the viewpoint of thorough supervision over the water concentration of the solvent. In the present invention, it is preferred to employ a

mixture of cyclooctane and a solvent of hydrocarbon other than cyclooctane. The expression "solvent of hydrocarbon other than cyclooctane" used herein means a chain aliphatic hydrocarbon having a linear or branched side chain, an alicyclic hydrocarbon which may have a linear or branched alkyl substituent, or an aromatic hydrocarbon which may have a linear or branched alkyl substituent.

In the present invention, it is preferred that cyclooctane be contained in the solvent in an amount of 1 to 50% by weight, especially 3 to 20% by weight, based on the total weight of the solvent. When the cyclooctane content falls within these ranges, the leakage of land prepit signal into RF signal can be satisfactorily reduced on the obtained optical recording medium. When the cyclooctane content exceeds the upper limit of the above ranges, the wetting of the substrate 12 with the coloring matter solution becomes unsatisfactory to thereby disenable formation of a uniform recording layer with the result that noise level would be aggravated and servo failure would be caused. On the other hand, when the cyclooctane content is under the lower limit of the above ranges, the amount of contained cyclooctane is so small that the effect of cyclooctane incorporation cannot be exerted to thereby disenable suppressing the leakage of land prepit signal into RF signal.

Controlling of the solvent evaporation rate is important for uniformly forming a film of given thickness by spin coating with the intent to control the configuration of coating film. Accordingly, the solvent combined with cyclooctane is desired to have a boiling point which falls within the range of 80 to 160°C. Especially, as the solvent, it is optimal to select the solvent from among hydrocarbons having 6 to 9 carbon atoms other than cyclooctane. When the number of carbon atoms of hydrocarbon is 5 or less, the boiling point of the solvent at ordinary temperature is so low and the vapor pressure of the solvent is so high. Therefore, for example, when forming a recording layer on a disk substrate of 120 mm diameter by spin coating, it is extremely difficult to ensure film thickness evenness between disk internal parts and external parts. On the other hand, when the number of carbon atoms of the hydrocarbon is 10 or greater, the boiling point of the solvent is generally so high that it is extremely difficult to evaporate the solvent off under ordinary spin coating and drying conditions, and that, even if film formation is attained, it is extremely difficult to attain a desired thickness.

The solvent of a hydrocarbon having 6 to 9 carbon atoms other than cyclooctane, which has a boiling point of 80 to 160°C and can be used in the present invention, is, for example, any of a solvent of chain aliphatic hydrocarbon such as n-heptane, n-octane, isoheptane or isooctane, a solvent of alicyclic hydrocarbon such as cyclohexane, methylcyclohexane, ethylcyclohexane, propylcyclohexane, 1,2-dimethylcyclohexane, 1,4-dimethylcyclohexane, 1,2,4-trimethylcyclohexane or cycloheptane, and a solvent of aromatic hydrocarbon such as toluene, p-xylene, o-xylene or ethylbenzene.

These organic solvents may be used individually or in combination in accordance with the purpose of increase of coloring matter solubility, regulation of evaporation rate, etc. For example, the aromatic hydrocarbon solvent is practically not used as a principal solvent because of high compatibility with a transparent substrate such as a polycarbonate substrate or an acrylic substrate, and is preferably used by being mixed in a small amount into a chain aliphatic hydrocarbon or an alicyclic hydrocarbon mainly for the purpose of increase of coloring matter solubility, etc.

The material for constituting the reflective layer 16, although not particularly limited as long as a high reflectivity can be realized to the wavelength of read-out laser beams, is preferably selected from among metals such as gold, silver, aluminum, platinum, rhodium and palladium, and alloys composed of a plurality thereof. The reflective layer 16 is generally formed by the sputtering method, and the thickness thereof is preferably in the range of 50 to 200 μm.

An ultraviolet curable resin can be used as the material for constituting the protective layer 18 provided on the surface of reflective layer 16. Preferably, a (meth)acrylic ultraviolet curable resin is used. For example, the above material is applied at a thickness of about 2 to 20 μm by spin coating and cured by, for example, irradiation with ultraviolet light. With respect to disks with the form of a single plate, such as CD·R, the protective layer 18 may be overlaid with a label printing layer. Further, a structure laminated through an adhesive layer with a dummy substrate or sheet, such as DVD·R, can be employed.

On the optical recording medium 10 of the present invention, the reflectivity of the incident light seen from the substrate 12 side, on the groove zones 20 is substantially equal to that on the land zones 22. Illustratively, the expression "the reflectivity on the groove zones 20 is substantially equal to that on the land zones 22" used herein means that, providing that $R_{20}$ represents the reflectivity on the groove zones 20 while $R_{22}$ represents the reflectivity on the land zones 22, $R_{20}$ and $R_{22}$ satisfy the relationship:

$$0.90 \leq R_{20}/R_{22} \leq 1.10,$$

preferably

$$0.93 \leq R_{20}/R_{22} \leq 1.07.$$

The reflectivity on the groove zones 20 is determined from (a) to (d) by matrix calculation:

(a) wavelength of incident light,
(b) optical constants of substrate 12 (refractive index and damping factor),
(c) optical constants of recording layer 14 (refractive index and damping factor) and film thickness $d_{20}$ on groove central zones, and
(d) optical constants of reflective layer 16 (refractive index and damping factor) and film thickness $d_{30}$ on film thickness $d_{20}$.

Likewise, the reflectivity on the land zones 22 is determined from (a') to (d') by matrix calculation:

(a') wavelength of incident light,
(b') optical constants of substrate 12 (refractive index and damping factor),
(c') optical constants of recording layer 14 (refractive index and damping factor) and film thickness $d_{22}$ on land central zones, and
(d') optical constants of reflective layer 16 (refractive index and damping factor) and film thickness $d_{32}$ on film thickness $d_{22}$.

As aforementioned, the use of a principal solvent containing an appropriate amount of cyclooctane having an appropriately high viscosity and high boiling point as compared with those of the principal solvent leads controlling the respective configurations on the groove zone and land zone of obtained coloring matter film. For example, by the regulation of a revolution speed in spin coating and the content ratio of cyclooctane, the thickness of coloring matter film in the groove zone can be mostly regulated, and the thickness of coloring matter film on the land zone can be changed. Thus, such a film configuration that the reflectivity on the groove zones 20 is substantially equal to that on the land zones 22 can be selected.
If the reflectivity on the groove zones 20 is substantially equal to that on the land zones 22 as mentioned above, the reflectivity exhibited when an optical pickup which follows the grooves is positioned at a site of land prepit presence is substantially equal to the reflectivity exhibited when the optical pickup is positioned at a site of land prepit absence, with the result that the leakage of land prepit signal into RF signal can be suppressed.
The optical recording medium of the present invention exhibit an amplitude of leakage of land prepit signal into RF signal, X(V), and an amplitude of $I_3$ signal, Y(V)', these X and Y satisfying the relationship:

$$-0.3 \leq X/Y \leq 0.3,$$

preferably

$$-0.2 \leq X/Y \leq 0.2.$$

When these relationships are satisfied, there can be reduced the degree of strain of signal waveform attributed to leakage of land prepit signal with respect to the waveform of $I_3$ signals which, among the signals, exhibit the highest occurrence frequency (largest number) and have the smallest amplitude so as to be most likely to be influenced by signal waveformstrain. As a result, the error rate (ratio of signal detection error) can be lowered. Herein, the $I_3$ signal refers to the signal recorded by the shortest pit (3T).

## EFFECT OF THE INVENTION

The present invention enables reducing the leakage of land prepit signal into RF signal because the reflectivity of the incident light seen from the substrate side, on groove zones is substantially equal to that on land zones, thereby attaining a lowering of error rate.
The use of a mixture of cyclooctane and at least one hydrocarbon having 6 to 9 carbon atoms other than cyclooctane as the solvent of the coloring matter solution to be applied onto a resin substrate enables controlling the configuration of formed coloring matter film. Thus, on the substrate, the reflectivity on groove zones can be rendered substantially equal to that on land zones. As a result, the leakage of land prepit signal into RF signal on the obtained optical recording medium can be reduced, thereby attaining a lowering of error rate.
Therefore, according to the present invention, there is provided the optical recording medium which, at the time of recording, enables accurately reading address signal from land prepit and which, during the optical reading of

recorded data signal at the time of reproduction, enables reducing reading error attributed to the leakage of land prepit signal for address information into RF signal for recorded data.

EXAMPLES

The present invention will further be illustrated below with reference to the following Examples which in no way limit the scope of the invention.

Example 1

A polycarbonate plate of 120 mm diameter and 0.6 mm thickness provided with tracking grooves (pitch: 0.74 µm, depth: 160 nm, and width (half-value width): 350 nm) in periodically zigzag form for DVD·R was used as the transparent resin substrate.

In the formation of the recording layer, a dipyrromethene metal complex dye of the formula:

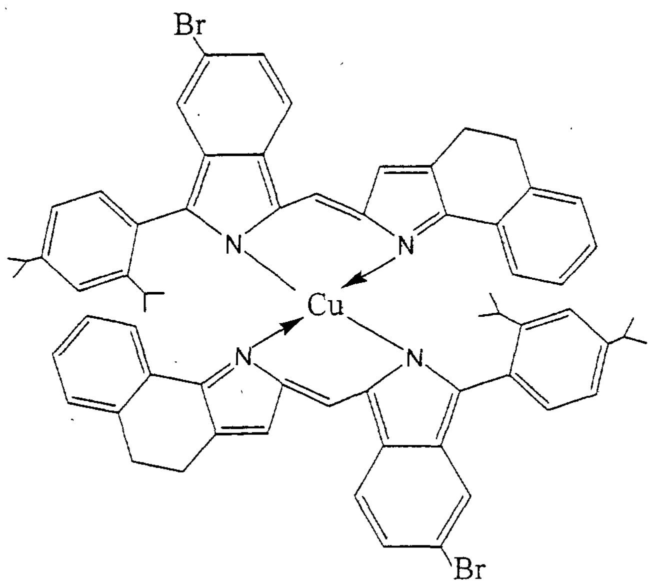

(2)

was dissolved in an amount of 20 g/lit. in a solvent consisting of 1,2-dimethylcyclohexane (DMCH) mixed with 10% by weight of cyclooctane. The obtained solution was filtered and applied onto the above substrate by spin coating at a revolution speed regulated so that the dye film thickness (thickness of recording layer) on groove central zones was 120 nm.

The thus formed dye film was dried at 80°C for 1 hr, and coated with an Au film of 100 nm thickness as the reflective layer by means of sputtering apparatus (model CDI 900, manufactured by Balzers).

Further, UV curable resin (SD 1700 produced by Dainippon Ink Kagaku Kogyo) was applied onto the reflective layer and cured with UV to thereby form the protective layer.
Thereafter, the surface of the protective layer was overlaid with a 0.6 mm thick polycarbonate plate through UV curable radical adhesive (Z8421H produced by JSR), and the adhesive was cured with UV irradiation. Thus, an optical recording medium was obtained.

The obtained optical recording medium was furnished with DVD interchangeable 8-16 modulated record (basic strategy type 3) at a linear velocity of 3.5 m/s by means of disk tester (DDU 1000 manufactured by Pulsetec Kogyo, wavelength = 657 nm, NA = 0.6).

Thereafter, likewise, signal at site of the above record was regenerated by means of disk tester comprising DDU 1000 mirror body and, mounted thereon, standard ROM regenerative optical system (wavelength = 650 nm, NA = 0.6), thereby evaluating error rate (PI error). Further, at that time, the amplitude of $I_3$ signal and the amplitude of the leakage of land prepit signal into RF signal were simultaneously evaluated. Still further, at that time, the amplitude of $I_3$ signal and the amplitude of the leakage of land prepit signal into RF signal and also the reflectivity on groove zones and reflectivity on land zones were simultaneously evaluated. The reflectivities were determined by the above-mentioned calculation. The results are listed in Table 1.

Example 2

The same substrate and dye as described in Example 1 were employed. The dye was dissolved in a concentration of 25 g/lit. in a mixture solvent consisting of ethylcyclohexane (ECH) mixed with 3% by weight of o-xylene and further mixed with 10% by weight of cyclooctane. The obtained solution was applied to coat the substrate under revolution conditions regulated so that the dye film thickness (thickness of recording layer) on groove central zones was 120 nm. In the same manner as in Example 1, an optical recording medium was prepared, and a signal evaluation thereof was conducted. The results are listed in Table 1.

Example 3

The same substrate as described in Example 1 was employed. A pyrromethene metal complex dye of the formula:

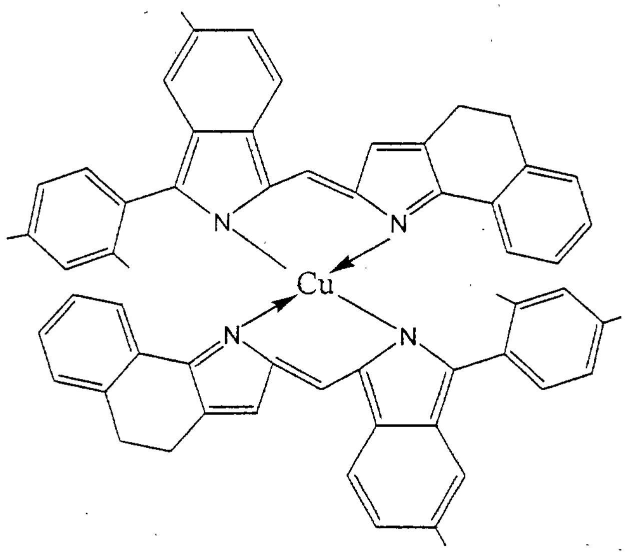

(3)

was dissolved in a concentration of 15 g/lit. in a solvent consisting of a 3:1 by weight mixture of ethylcyclohexane (ECH) and cyclohexane (CH) mixed with 5% by weight of cyclooctane. The obtained solution was applied to coat the substrate under revolution conditions regulated so that the dye film thickness (thickness of recording layer) on groove central zones was 120 nm. In the same manner as in Example 1, an optical recording medium was prepared, and a signal evaluation thereof was conducted. The results are listed in Table 1.

Comparative Example 1

The same substrate and dye as described in Example 1 were employed. The dye was dissolved in a concentration of 20 g/lit. in ethylcyclohexane (ECH) (without addition of cyclooctane). The obtained solution was applied to coat the substrate under revolution conditions regulated so that the dye film thickness (thickness of recording layer) on groove central zones was 120 nm. In the same manner as in Example 1, an optical recording medium was prepared, and a signal evaluation thereof was conducted. The results are listed in Table 1.

Comparative Example 2

The same substrate and dye as described in Example 1 were employed. The dye was dissolved in a concentration of 20 g/lit. in a solvent consisting of ethylcyclohexane (ECH) mixed with 60% by weight of cyclooctane. The obtained solution was applied to coat the substrate under revolution conditions regulated so that the dye film thickness (thickness of recording layer) on groove central zones was 120 nm. In the same manner as in Example 1, an optical recording medium was prepared, and a signal evaluation thereof was conducted. The results are listed in Table 1.

Table 1

| | Coloring matter structure | Coating solvent (principal solvent) | Addn. amt of cyclooctane (wt.%) | Groove reflectivity $R_{20}$(%) | Land reflectivity $R_{22}$(%) | $R_{20}/R_{22}$ | PI error | Amplitude of leakage of land prepit signal into RF signal X(V) | Amplitude of $I_3$ signal Y(V) | X/Y |
|---|---|---|---|---|---|---|---|---|---|---|
| Example 1 | Formula 1 | DMCH | 10 | 60 | 57 | 1.05 | 20 | 0.07 V | 0.45 V | 0.16 |
| Example 2 | Formula 1 | ECH | 10 | 60 | 56 | 1.06 | 30 | 0.10 V | 0.45 V | 0.22 |
| Example 3 | Formula 2 | ECH+CH | 5 | 55 | 54 | 1.02 | 10 | 0.04 V | 0.52 V | 0.08 |
| Comp.Ex. 1 | Formula 1 | ECH | 0 | 60 | 73 | 0.82 | 400 | 0.20 V | 0.45 V | 0.44 |
| Comp.Ex. 2 | Formula 1 | ECH | 60 | servo failure | | | | | | |

It is apparent from the results of Table 1 that, on the optical recording medium of the present invention, the leakage of land prepit signal into RF signal is reduced, and the error rate is desirably low.

## Claims

1. An optical recording medium comprising a recording substrate having grooves and lands provided in the form of a spiral or concentric circles and, superimposed thereon, a recording layer, a reflective layer and a protective layer,
   said recording layer comprising a film of coloring matter formed by applying a coloring matter solution on upper surfaces of the grooves and lands,
   wherein groove zones and land zones exhibit substantially equal reflectivities of the incident light seen from the recording substrate side.

2. An optical recording medium as claimed in claim 1, wherein the coloring matter solution comprises a coloring matter dissolved in a solvent comprising a mixture of cyclooctane and at least one hydrocarbon having 6 to 9 carbon atoms other than cyclooctane.

3. An optical recording medium as claimed in claim 2, wherein cyclooctane is contained in the solvent in an amount of 1 to 50% by weight.

4. An optical recording medium as claimed in any preceding claim, wherein the coloring matter is a dipyrromethene metal complex.

5. An optical recording medium as claimed in any preceding claim, which exhibits an amplitude of leakage of land prepit signal into RF signal, X(V), and an amplitude of $I_3$ signal, Y(V), said X and Y satisfying the relationship:

$$-0.3 \leq X/Y \leq 0.3.$$

6. A process for producing an optical recording medium, comprising coating a substrate with a coloring matter solution so as to form a recording layer, wherein the coloring matter solution comprises a coloring matter dissolved in a solvent comprising a mixture of cyclooctane and at least one hydrocarbon having 6 to 9 carbon atoms other than cyclooctane.

7. A process as claimed in claim 6, wherein cyclooctane is contained in the solvent in an amount of 1 to 50% by weight.

8. A process as claimed in claim 6 or 7, wherein the coloring matter is a dipyrromethene metal complex.

9. An optical recording medium produced by a process as claimed in any one of claims 6 to 8, which optical recording medium exhibits an amplitude of leakage of land prepit signal into RF signal, X(V), and an amplitude of $I_3$ signal, Y(V), said X and Y satisfying the relationship:

$$-0.3 \leq X/Y \leq 0.3.$$

*Fig. 1*

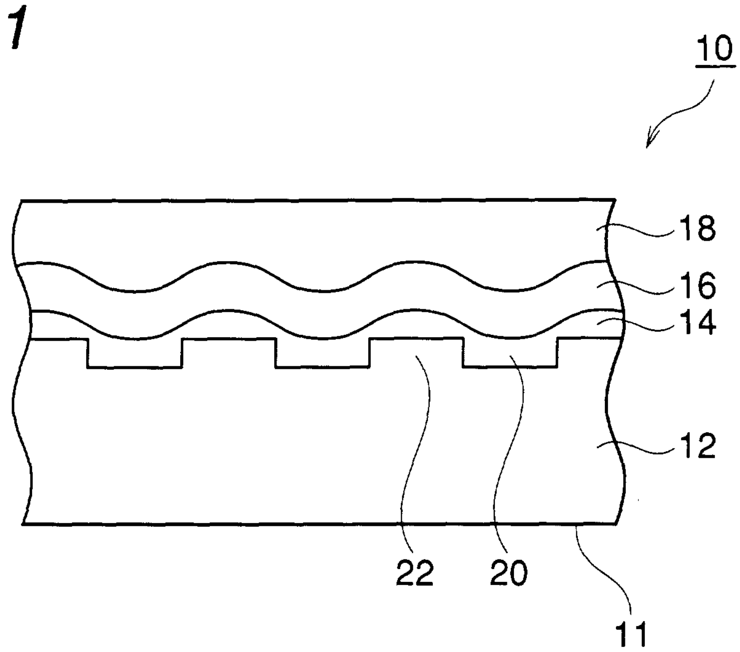
10
18
16
14
12
22
20
11

*Fig. 2*

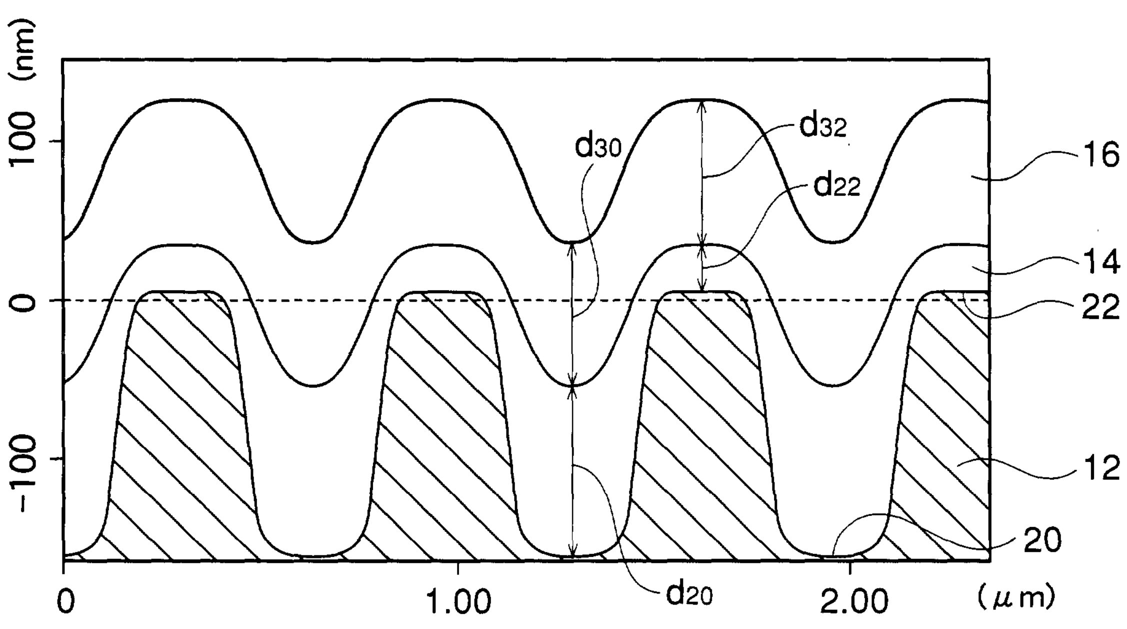
(nm)
100
0
-100
d30
d32
d22
16
14
22
12
20
d20
0
1.00
2.00
(μm)